## Europäisches Patentamt

## European Patent Office

## Office européen des brevets

(11) Veröffentlichungsnummer: **0 196 502**
**A1**

(12) **EUROPÄISCHE PATENTANMELDUNG**

(21) Anmeldenummer: **86103166.4**

(22) Anmeldetag: **10.03.86**

(51) Int. Cl.⁴: **B 23 Q 1/14**

(30) Priorität: **14.03.85 DE 3509240**

(43) Veröffentlichungstag der Anmeldung:
**08.10.86 Patentblatt 86/41**

(84) Benannte Vertragsstaaten:
**AT BE CH DE FR GB IT LI NL SE**

(71) Anmelder: **Traub AG**
**Ulmer Strasse 49-55**
**D-7313 Reichenbach/Fils(DE)**

(72) Erfinder: **Klauss, Walter**
**Frühlingstrasse 39**
**D-7327 Adelberg(DE)**

(74) Vertreter: **Wuesthoff, Franz, Dr.-Ing. et al,**
**Patentanwälte Wuesthoff -v. Pechmann-Behrens-Goetz**
**Schweigerstrasse 2**
**D-8000 München 90(DE)**

(54) **Antriebseinrichtung für eine Werkzeugschneide.**

(57) Eine Antriebseinrichtung zum Bewegen einer Werkzeugschneide (14) über kleine Wegstrecken im Millimeterbereich mit hohen Frequenzen im kHz-Bereich weist mehrere piezoelektrische Kristalle A, B, ... H auf, welche auf einer Seite an einem Widerlager (10) abgestützt sind und auf der gegenüberliegenden Seite die Werkzeugschneide (14) beaufschlagen, so daß sich ihre Elektrostriktionen addieren. Entsprechend können auch Ferromagnete in einem magnetischen Wechselfeld zum Bewegen einer Werkzeugschneide angeordnet werden.

FIG.2

EP 0 196 502 A1

PATENTANWALTE

WUESTHOFF-v.PECHMANN-BEHRENS-GOETZ

EUROPEAN PATENT ATTORNEYS

DR.-ING.
DR.PHIL.
DIPL.-ING. **0196502**
DIPL.-CHE
DR.-ING. D
DIPL.-ING. DIPL.-WIRTSCH.-ING. RUPERT GOETZ
DIPL.-PHYS. DR. AXEL VON HELLFELD

D-8000 MÜNCHEN 90
SCHWEIGERSTRASSE 2

TELEFON: (089) 66 20 51
TELEGRAMM: PROTECTPATENT
TELEX: 5 24 070
TELEFAX: (089) 66 39 36 (III)

Traub AG

EP-59 950

## Antriebseinrichtung für eine Werkzeugschneide

Die Erfindung betrifft eine Antriebseinrichtung zum Bewegen von zum Beispiel einer Werkzeugschneide über insbesondere kleine Wegstrecken im Millimeterbereich mit hohen Frequenzen im kHz-Bereich.

In Werkzeugmaschinen ist es häufig erwünscht, die Werkzeugschneide entsprechend vorgegebenen Wegbefehlen über kurze Wegstrecken mit einer sehr hohen Dynamik zu bewegen. Unter einer "hohen Dynamik" wird eine Bewegung der Werkzeugschneide verstanden, die eine zeitlich extrem kleine Phasenverschiebung zwischen der vorgegebenen Soll-Position der Werkzeugschneide und ihrer tatsächlichen Position aufweist.

Bei herkömmlichen Servoantrieben für Werkzeugschneiden werden hydraulische oder elektrische Servomotoren eingesetzt, bei denen die rotierende Bewegung mittels eines Gewindetriebes in eine translatorische Bewegung umgewandelt wird oder mittels der Hydraulik-Flüssigkeit ein Kolben bewegt wird, der die gewünschte translatorische Bewegung auf die Werkzeugschneide überträgt. Für den Antrieb einer Werkzeugschneide mit sehr hoher Dynamik und hoher Frequenz von einigen kHz oder mehr sind derartige herkömmliche Servoantriebe nicht geeignet. Die Grenzen herkömmlicher Antriebseinrichtungen hinsichtlich einer hohen Dynamik der Werkzeugschneide sind zum Teil dadurch bedingt, daß bei ihnen relativ große Massen bewegt werden müssen. Zur Erreichung großer Beschleunigungen sind deshalb extrem große Kräfte erforderlich. Die bei herkömmlichen Servoantrieben bewegten Massen
bestehen zum Großteil aus Bauteilen der Antriebseinrichtung
selbst, also nicht allein der zu bewegenden Werkzeugschneide.

Der Erfindung liegt die Aufgabe zugrunde, eine Antriebseinrichtung für insbesondere Werkzeugschneiden zu schaffen, die eine
numerische Steuerung der Bewegung der Werkzeugschneide mit sehr
hoher Dynamik und Frequenz ermöglicht.

Gemäß einer ersten erfindungsgemäßen Lösung wird hierzu zumindest ein piezoelektrischer Kristall derart auf einer seiner
Seiten an einem Widerlager abgestützt während er auf der gegenüberliegenden Seite die Werkzeugschneide beaufschlagt, daß seine Elektrostriktion bei Anlegen eines elektrischen Feldes eine
Änderung des Abstandes zwischen der Werkzeugschneide und dem
Widerlager erzeugt.

Bei der erfindungsgemäßen Verwendung eines piezoelektrischen
Kristalls werden außer der Masse der Werkzeugschneide selbst
kaum andere Massen bewegt. Vielmehr wird die Elektrostriktion,
d.h. die elastische Deformation des piezoelektrischen Kristalls
in einem elektrischen Feld, unmittelbar auf die Werkzeugschneide übertragen.

In einer Variante der Erfindung wird die Werkzeugschneide dadurch bewegt, daß zumindest ein Ferromagnet auf einer Seite an
einem Widerlager abgestützt ist, während er auf seiner gegenüberliegenden Seite die Werkzeugschneide beaufschlagt, wobei
ein magnetisches Wechselfeld derart an den Ferromagneten angelegt wird, daß seine Magnetostriktion, also seine Deformation
im Magnetfeld, eine Änderung des Abstandes zwischen der Werkzeugschneide und dem Widerlager erzeugt.

Auch diese Anordnung ermöglicht eine Bewegung der Werkzeugschneide unter extrem hoher Dynamik mit hohen Frequenzen im
kHz-Bereich.

Die Elektrostriktion eines Piezo-Kristalls ist ebenso wie die
Magnetostriktion eines Ferromagneten ist dem Betrage nach
relativ klein und auch bei aufwendig gezüchteten Kristallen in
der Regel auf weniger als ein mm beschränkt.

In einer bevorzugten Ausgestaltung der Erfindung ist deshalb
vorgesehen, daß mehrere piezoelektrische Kristalle oder mehrere
Ferromagnete derart in Reihe geschaltet sind, daß sich ihre
Elektrostriktionen bzw. Magnetostriktionen addieren, wobei ein
in der Reihe außen liegender Kristall bzw. Ferromagnet an dem
Widerlager abgestützt ist, während der am anderen Ende der Reihe außen liegende Kristall bzw. Ferromagnet die Werkzeugschneide beaufschlagt. Die elektrischen bzw. magnetischen Felder werden phasengleich an die einzelnen Kristalle bzw. Magnete der
Reihe angelegt, damit die Elektro- bzw. Magnetostriktionen der
einzelnen Kristalle bzw. Ferromagnete "im Takt" erfolgen und
sich positiv addieren.

Die Elektrostriktion eines piezoelektrischen Kristalles, also
seine Dilatation (Dehnung) und seine Kompression, sind in
erster Näherung dem angelegten Feld innerhalb des maximalen
Hubes des Kristalls direkt proportional, sofern der Kristall
nicht druckbelastet ist. Bei der Beschleunigung der Werkzeugschneide wirkt aber dessen Trägheitsmoment als Gegenkraft auf
den piezoelektrischen Kristall zurück, so daß die genannte
Proportionalität gestört ist.

In einer Ausgestaltung der Erfindung ist deshalb eine Lage-Meßeinrichtung für die Werkzeugschneide vorgesehen, welche mit der
Schaltung zur Erzeugung der elektrischen bzw. magnetischen Felder zu einem Lage-Regelkreis verbunden ist. Damit lassen sich
die elektrischen bzw. magnetischen Felder zur Erzeugung der
Elektro- bzw. Magnetostriktionen derart zeitlich steuern, daß
die Ist-Position der Werkzeugschneide jeweils mit extrem kleiner Phasenverschiebung der numerisch vorgegebenen Soll-Position
entspricht. Die erfindungsgemäßen Antriebseinrichtungen lassen sich z.B. beim Unrunddrehen eines Werkstückes vorteilhaft einsetzen. Soll mittels einer Drehmaschinenspindel ein nicht rotationssymmetrisches Werkstück erzeugt werden, wird eine erfindungsgemäße Antriebseinrichtung als Stellglied für die Werkzeugschneide derart eingesetzt, daß deren Position an vorgegebenen
Drehwinkeln numerisch gesteuert verändert wird.

Auch als Spanbrech-Einrichtung kann die erfindungsgemäße Antriebseinrichtung verwendet werden. Hierzu wird der Vorschubbewegung eines Drehmeißels mittels der als Stellglied verwendeten
Antriebseinrichtung eine hochfrequente Bewegung überlagert. Dadurch wird der Span-Querschnitt ständig periodisch verändert,
wodurch eine Kerbwirkung erzielt und der Spanbruch gefördert
wird.

Nachfolgend ist die Erfindung anhand der Zeichnung näher beschrieben. Dabei zeigt:

Fig. 1 eine schematische Darstellung einer Antriebseinrichtung
       mit zwei piezoelektrischen Kristallen und

Fig. 2 eine schematische Darstellung einer Antriebseinrichtung
       mit einer Vielzahl von piezoelektrischen Kristallen und
       einem Lage-Regelkreis.

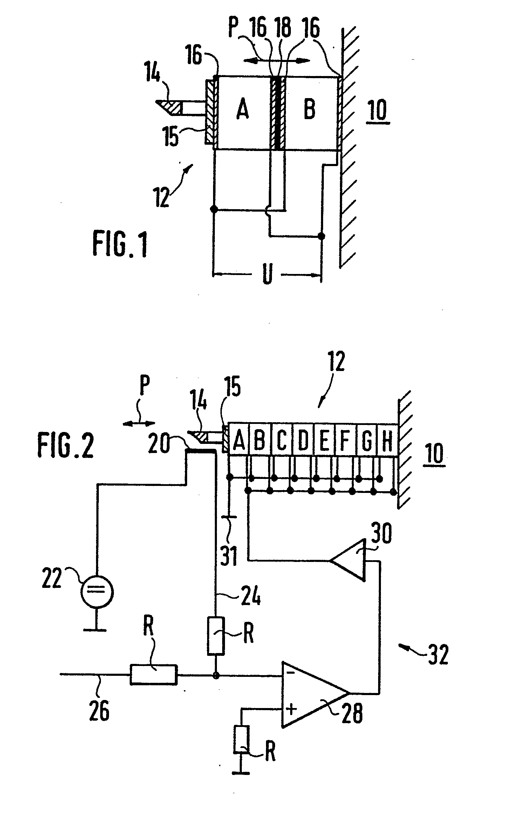

Gemäß Fig. 1 ist auf einem Widerlager 10 einer (nicht gezeigten) Werkzeugmaschine eine insgesamt mit dem Bezugszeichen 12
angedeutete Antriebseinrichtung abgestützt. Auf der dem Widerlager 10 gegenüberliegenden Seite der Antriebseinrichtung 12
ist eine Werkzeugschneide 14 mittels einer Halterung 15 befestigt.

Die Antriebseinrichtung des in Fig. 1 gezeigten Ausführungsbeispieles besteht aus den beiden piezoelektrischen Kristallen A,
B. Die Elektroden 16 zur Anlegung des elektrischen Feldes U
sind jeweil in bekannter Weise auf die Stirnflächen der piezoelektrischen Kristalle A, B aufgetragen. Zwischen den Elektroden 16 benachbarter piezoelektrischer Kristalle ist eine Isolationsschicht 18 vorgesehen. Es versteht sich, daß die Isolationsschicht 18 eine möglichst geringe Elastizität aufweist. Ein hartes Keramikmaterial ist geeignet. Auch das Widerlager 10 ist extrem hart und weist insgesamt eine Masse auf, gegen die die Masse der bewegten Teile, also der Antriebseinrichtung 12 und der Werkzeugschneide 14 vernachlässigbar klein ist.

Bei Anlegen eines phasengleichen elektrischen Feldes dehnen sich die piezoelektrischen Kristalle A, B in Richtung des Pfeiles P aus, so daß sich der Abstand der Werkzeugschneide 14 vom Widerlager 10 ändert.

Fig. 2 zeigt schematisch einen Lage-Regelkreis für die Werkzeugschneide 14, welche von einer Antriebseinrichtung 12 mit sieben piezoelektrischen Kristallen A, B, C, D, E, F, G und H bewegt wird. Eine Lage-Meßeinrichtung 20 in Form einer bekannten Differential-Feldplatte, deren elektrisches Ausgangssignal von der Relativlage zwischen der (metallischen) Werkzeugschneide 14 und der ortsfesten Lage-Meßeinrichtung 20 abhängt, ist in der dargestellten Weise mit der Schaltung zur Erzeugung der elektrischen Felder für die piezoelektrischen Kristalle A, B, ..., H verbunden. Die Differential-Feldplatte 20 ist an die Versorgung 22 angeschlossen und gibt über die Leitung 24 einen Lage-Istwert der Werkzeugschneide 14 ein. Der Lage-Sollwert wird über die Leitung 26 eingekoppelt. Ein Differenzverstärker 28 dient als Lageregler, dessen Ausgangssignal über einen Leistungsverstärker 30 an alle in Fig. 2 rechts gelegenen Elektroden an die piezoelektrischen Kristalle A, B, ..., H angelegt wird. Das an den in Fig. 2 links angeordneten Elektroden der piezoelektrischen Kristalle angelegte Bezugspotential 31 definiert das elektrische Feld.

Der Lage-Regelkreis (32) steuert somit die Werkzeugschneide 14, beispielsweise einen Drehmeißel, mit hoher Dynamik und ohne Phasenverschiebung entsprechend dem über die Leitung 26 eingegebenen Lage-Sollwert.

Statt der piezoelektrischen Kristalle A, B, ..., H können auch Ferromagnete entsprechend angeordnet werden, wobei statt der elektrischen Felder Magnetfelder angelegt werden, welche in bekannter Weise durch eine die Ferromagnete umfassenden Spule erzeugt werden.

PATENTANWÄLTE

# WUESTHOFF - v. PECHMANN - BEHRENS - GOETZ

### EUROPEAN PATENT ATTORNEYS

DR.-ING. PR.
DR. PHIL. FR
DIPL.-ING. C **0196502**
DIPL.-CHEM. DR. E. FREIHERR VON PECHMANN
DR.-ING. DIETER BEHRENS
DIPL.-ING. DIPL.-WIRTSCH.-ING. RUPERT GOETZ
DIPL.-PHYS. DR. AXEL VON HELLFELD

D-8000 MÜNCHEN 90
SCHWEIGERSTRASSE 2

TELEFON: (089) 66 20 51
TELEGRAMM: PROTECTPATENT
TELEX: 5 24 070
TELEFAX: (089) 66 39 36 (III)

Traub AG

EP-59 950

## P a t e n t a n s p r ü c h e :

1.    Antriebseinrichtung zum Bewegen von zum Beispiel einer Werkzeugschneide (14) über insbesondere kleine Wegstrecken im Millimeterbereich mit hohen Frequenzen, insbesondere im kHz-Bereich,

dadurch  g e k e n n z e i c h n e t ,

daß zumindest ein piezoelektrischer Kristall (A, B, ...) derart auf einer Seite an einem Widerlager (10) abgestützt ist und auf der gegenüberliegenden Seite die Werkzeugschneide (14) beaufschlagt, daß die Elektrostriktion des Kristalls oder der Kristalle (A, B, ...) eine Änderung des Abstandes zwischen der Werkzeugschneide (14) und dem Widerlager (10) erzeugt.

2.    Antriebseinrichtung nach Anspruch 1,

dadurch  g e k e n n z e i c h n e t ,

daß mehrere piezoelektrische Kristalle (A, B, ..., H) derart in Reihe angeordnet sind, daß sich ihre Elektrostriktionen addieren, wobei ein in der Reihe außen liegender Kristall (H) an dem Widerlager (10) abgestützt ist und der am anderen Ende der Reihe außen liegende Kristall (A) die Werkzeugschneide (14) beaufschlagt und wobei elektrische Felder mittels Kontaktelektroden (16) phasengleich an die Kristalle (A, B, ..., H) angelegt werden.

3.     Antriebseinrichtung zum Bewegen von zum Beispiel einer
Werkzeugschneide über insbesondere kleine Wegstrecken im Millimeterbereich mit hohen Frequenzen, insbesondere im kHz-Bereich,
dadurch  g e k e n n z e i c h n e t,
daß zumindest ein Ferromagnet derart auf einer Seite an einem
Widerlager abgestützt ist und auf der gegenüberliegenden Seite
die Werkzeugschneide beaufschlagt, daß bei Anlegen eines magnetischen Wechselfeldes die Magnetostriktion des oder der Ferromagnete eine Änderung des Abstandes zwischen der Werkzeugschneide und dem Widerlager erzeugt.

4.     Antriebseinrichtung nach Anspruch 3,
dadurch  g e k e n n z e i c h n e t,
daß mehrere Ferromagnete derart in Reihe angeordnet sind, daß
sich ihre Magnetostriktionen addieren, wobei ein in der Reihe
außen liegender Ferromagnet an dem Widerlager abgestützt ist
und der an dem anderen Ende der Reihe außen liegende Ferromagnet die Werkzeugschneide beaufschlagt und wobei die magnetischen Wechselfelder phasengleich an die Ferromagnete angelegt
werden.

5.     Antriebseinrichtung nach einem der vorhergehenden
Ansprüche,
dadurch  g e k e n n z e i c h n e t,
daß eine Lage-Meßeinrichtung (20) für die Werkzeugschneide (14)
vorgesehen ist, welche ortsfest in bezug auf das Widerlager
(10) angeordnet ist.

6.     Antriebseinrichtung nach Anspruch 5,
dadurch  g e k e n n z e i c h n e t,
daß die Lage-Meßeinrichtung (20) mit einer Schaltung (24, 26,
28, 30) zur Erzeugung der elektrischen bzw. magnetischen Felder
zu einem Lage-Regelkreis (32) verbunden ist.

7.    Antriebseinrichtung nach einem der Ansprüche 5 oder 6,
dadurch g e k e n n z e i c h n e t ,
daß eine berührungslose Lage-Meßeinrichtung (20), wie eine
Differentialfeldplatte, vorgesehen ist.


8.    Antriebseinrichtung nach einem der vorhergehenden
Ansprüche,
dadurch g e k e n n z e i c h n e t ,
daß sie als Stellglied in einer Drehmaschinenspindel zur nicht
rotationssymmetrischen Bearbeitung eines Werkstückes Verwendung
findet.


9.    Antriebseinrichtung nach einem der Ansprüche 1-7,
dadurch g e k e n n z e i c h n e t ,
daß sie als Stellglied für einen Drehmeißel derart Verwendung
findet, daß die Elektro- bzw. Magnetostriktion der Vorschubbewegung des Drehmeißels überlagert wird.


2064

FIG.1

FIG.2

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int CI 4) |
|---|---|---|---|
| X | US-A-3 835 338  (MARTIN)<br>* Anspruch 1 * | 1,2 | B 23 Q   1/14 |
| Y | | 5,6 | |
| X | DE-B-1 268 936  (DAIMLER)<br>* Anspruch 1 * | 3 | |
| Y | DE-A-1 552 492  (WENCZLER)<br>* Anspruch 1 * | 5,6 | |
| A | FR-A-2 253 281  (ELEKTROMAT) | 1 | |
| A | US-A-2 831 295  (WEISS) | 1 | |
| A | US-A-2 818 686  (WEISS) | 1 | **RECHERCHIERTE SACHGEBIETE (Int CI 4)** |
| A | CH-A- 332 924  (CARO)<br>* Figuren 10,11 * | 3 | B 23 Q<br>B 23 B |

Der vorliegende Recherchenbericht wurde für alle Patentansprüche erstellt.

| Recherchenort<br>DEN HAAG | Abschlußdatum der Recherche<br>18-06-1986 | Prüfer<br>DE GUSSEM J.L. |
|---|---|---|